**Europäisches Patentamt**

**European Patent Office**

**Office européen des brevets**

(19)

(11) Veröffentlichungsnummer: **0 221 526**
**B1**

(12) **EUROPÄISCHE PATENTSCHRIFT**

(45) Veröffentlichungstag der Patentschrift: **08.08.90**

(21) Anmeldenummer: **86115186.8**

(22) Anmeldetag: **03.11.86**

(51) Int. Cl.⁵: **A 61 C 5/06**

(54) **Gerät zur Füllung von Zahnkavitäten.**

(30) Priorität: **08.11.85 DE 3539579**

(43) Veröffentlichungstag der Anmeldung:
**13.05.87 Patentblatt 87/20**

(45) Bekanntmachung des Hinweises auf die
Patenterteilung:
**08.08.90 Patentblatt 90/32**

(84) Benannte Vertragsstaaten:
**AT BE CH ES FR GB IT LI LU NL SE**

(56) Entgegenhaltungen:
**EP-A-0 218 877**
**GB-A-1 055 910**
**US-A-3 792 530**
**US-A-4 377 380**

(73) Patentinhaber: **Hirdes, Rüdiger, Dr. med. dent.**
**Kleinherbeder Strasse 9 a**
**D-5810 Witten (DE)**

(72) Erfinder: **Hirdes, Rüdiger, Dr. med. dent.**
**Kleinherbeder Strasse 9 a**
**D-5810 Witten (DE)**

(74) Vertreter: **Eichelbaum, Lambert, Dipl.-Ing.**
**Krüppeleichen 6**
**D-4350 Recklinghausen (DE)**

Courier Press, Leamington Spa, England.

**Beschreibung**

Die Erfindung betrifft ein Gerät zur Füllung von Zahnkavitäten mit Füllstoffen, z.B. mit Amalgam, welches einen Füllstutzen und eine in einem Führungskanal hin- und herzubewegende, in den Füllstutzen übergehende Füll-Schubachse sowie ein quer zum Füllstutzen angeordnetes, in ihn einmündendes sowie herausnehmbares Wechselmagazin aufweist, aus dem über eine in einem zweiten Führungskanal geführte Magazin-Schubachse zu Beginn des oberhalb der Einmündung des Wechselmagazins beginnenden und am Ausgang des Füllstutzens endenden Arbeitshubes der Füll-Schubachse ein Teil des Füllstoffes in den Füllstutzen zu drücken ist, wobei die von einem gemeinsamen Gehäuse umgebene Füll- und Magazin-Schubachse durch ein ihre Bewegung zueinander koordinierendes, mechanisches Getriebe miteinander gekoppelt sind, zu dem eine mit der Magazin-Schubachse verbundene Zahnstange und ein an dem Gehäuse schwenkbeweglich angelenkter Schubhebel gehören, der mit seinem freien Ende in die Zahnstange eingreift und diese während eines Arbeitshubes über einen mit der Füll-Schubachse in Antriebsverbindung stehenden, fingerbetätigten Schiebeknopf und einen Vorsprung in Richtung auf den Füllstutzen verschiebt, bevor das vordere Ende der Füll-Schubachse die Oberkante der Einmündung des Wechselmagazins in den Füllstutzen erreicht.

Bei diesem Gerät gemäß einem älteren Vorschlag ist der fingerbetätigte Schiebeknopf stets parallel mit und zur Füll-Schubachse beweglich. Mit ihm ist daher ein rein translatorische Bewegung möglich, die durch den Vor- und Rückschub des Bedienungsfingers, z.B. des Zeigefingers, durchgeführt wird.

Es wurde nun gefunden, daß unter bestimmten Umständen es ergonomisch auch günstiger sein kann, wenn die Bedienungsperson zu der erforderlichen translatorischen Bewegung der Füll-Schubachse mit dem Betätigungsfinger eine Druckbewegung auf den Schiebeknopf ausübt.

Diese Alternative zeichnet sich im einzelnen dadurch aus, daß der Schiebeknopf aus einem an dem Gehäuse schwenkbeweglich gelagerten, zweiarmigen Drehschieber besteht, der mit seinem einen, eine Fingermulde aufweisenden Arm aus dem Gehäuse herausragt, um mit dem Ende seines anderen Armes in ein gleichfalls am Gehäuse gelagertes Zahnsegment selenkig eingreift, dessen Verzahnung mit einem am Gehäuse drehfest gelagerten Zahnritzel kämmt, mit dem ein Drehelement drehfest verbunden ist, welches einen ersten Vorsprung zum Vorschub des Schubhebels und damit der Zahnstange der Magazin-Schubachse und einen zweiten Vorsprung zum Vorschub der Füll-Schubachse aufweist.

Mit dieser Lösung wird mittels des Zeigefingers der Bedienungsperson mittels einer Druckbewegung ein zweiarmiger Drehschieber auf einer Kreisbogenbahn betätigt und diese kreisbogenförmige Bewegung mittels des vorbeschriebenen Getriebes in eine translatorische Bewegung sowohl auf die Magazin- als auch auf die Füll-Schubachse übersetzt und zugleich beide Bewegungen miteinander koordiniert. Auch dadurch wird sichergestellt, daß die Magazin-Schubachse bereits die gewünschte kleine Amalgamportion ohne Vorhärtung zu einem Zeitpunkt in den Füllstutzen gedrückt hat, wenn die Füll-Schubachse zwar bereits ihren Arbeitshub begonnen, jedoch noch nicht die Oberkante der Einmündung des Wechselmagazins in den Füllstutzen erreicht hat und somit auch nicht die Austragung der kleinen, keinen nennenswerten und damit auch keine Vorhärtung auslösenden Druckkräften unterworfenen Amalgamportion in den Füllstutzen verhindert.

Nach einer vorteilhaften Weiterbildung der Erfindung besteht das Drehelement aus einer Scheibe, deren erster Vorsprung von einer an ihrem Umfang angeordneten Nockenfläche und deren zweiter Vorsprung von einer Kreisbogenverzahnung gebildet ist, die sich mit einer an der Füll-Schubachse befestigten Zahnleiste in Eingriff befindet. In diesem Fall besteht gemäß dem älteren Vorschlag der Schubhebel aus einer Blattfeder, die mit ihrem einen Ende am Gehäuse unbeweglich befestigt ist und mit ihrem freien Ende in die Zahnstange der Magazin-Schubachse eingreift und diese im vorliegenden Fall unter Wirkung des ersten, als Nockenfläche ausgebildeten Vorsprunges verschiebt.

Das Drehelement und das Ritzel sind dabei vorteilhaft auf der gleichen Achse wie der zweiarmige Drehschieber gelagert und das Ritzel ist mit dem Drehelement relativ drehunbeweglich verbunden, wobei sämtliche dieser drei Teile nur eine Drehachse benötigen. Die zweite Drehachse ist lediglich für das am Gehäuse gelagerte Zahnsegment erforderlich.

Die Kreisbogenverzahnung des Drehelementes rastet vorteilhaft bei in ihrer Extremlage vorgeschobener Füll-Schubachse und einem auf letztere wirkenden Vibrator aus der Zahnleiste der Füll-Schubachse aus. Dadurch werden im Augenblick des Vibrationsvorganges keine nachteiligen Schwingungskräfte von der Füll-Schubachse auf die Zähne der Kreisbogenverzahnung, auf die der Zahnleiste, des Ritzels und die des Zahnsegmentes übertragen.

Nach einer vorteilhaften Weiterbildung der Erfindung greift an dem zweiarmigen Drehschieber eine Rückholfeder an, die ihn unter gleichzeitiger Zurückziehung der Füll-Schubachse in seine Ausgangsposition zurückschwenkt. Dadurch braucht die Bedienungsperson in Verbesserung der Ergonomie nur noch beim Vorschub der Füll- und Magazin-Schubachsen auf den Drehschieber eine Druckkraft auszuüben, während die Rückholfeder für die Zurückziehung der Füll-Schubachse und für die Zurückschwenkung des zweiarmigen Drehschiebers sorgt.

Beim Verdichten des Füllstoffes mit Vibratoren, kann der Rand der Zahnkavität durch das Ende der in aller Regel aus Metall bestehenden Füll-Schubachse sowie durch dem umgebenden, gleichfalls aus Metall bestehenden Füllstutzen beschädigt werden. Um dies zu verhindern und gleichwohl eine im Sinne der Aufgabenstellung gleichmäßige Kondensation der Amalgamportionen sicherzustellen, ist nach dem Füllen der Zahnkavität über das freie Ende des Füllstutzens kraft- und/oder formschlüssig eine Stopfhülse aus einem gegenüber dem Zahnschmelz weicheren Material schiebbar und nach Beendigung des Form- und Verdichtungsvorganges per Hand davon abziehbar. Diese Stopfhülse weist an einem Ende einen festen geschlossenen, insbesondere von der Füll-Schubachse während des Verdichtungsvorganges beaufschlagbaren Stopfkern und am anderen Ende einen den Füllstutzen elastisch umgreifenden Haltering auf. Der Haltering ist an seinem freien Ende mit einem Klemmring und an seinem dem Stopfkern zugewandten Ende mit einem längenveränderlichen Dehnring versehen, durch welchen die auf den Stopfkern ausgeübten Vibrationsstöße des Endes der Füll-Schubachse die erforderliche Längendehnung zulassen, ohne daß sich der Klemmring vom Außenumfang der Stopfhülse löst.

Besonders vorteilhaft besteht die Stopfhülse aus einem Gummi von geeigneter Shore-Härte oder aus einem Kunststoff, z.B. aus Polyamid oder einem Polyolefin, und ist an der Außenfläche ihres Stopfkernes mit unterschiedlichen Konfigurationen in Form einer Kugel, eines abgerundeten Kegels, eines Ellipsoids oder eines abgerundeten Zylinders versehen. Dadurch kann, sozusagen blitzartig, durch Überschieben einer entsprechend konfigurierten Stopfhülse über das Ende des Füllstutzens ein für die jeweilige Form der Zahnkavität optimal günstige Stopfform als Einweg-Produkt an dem neuen Füllgerät angeordnet und ebenso rasch nach seinem Gebrauch wieder entfernt werden.

Mehrere Ausführungsbeispiele der Zusatzerfindung sind in den Zeichnungen dargestellt. Dabei zeigen:

Fig. 1 eine teilweise Schnittansicht durch die alternative Ausführungsform des neuen Gerätes mit einer als Schubhebel ausgebildeten Blattfeder,

Fig. 2 die Ausschnittvergrößerung II von Fig. 1 mit einer auf das Ende des Füllstutzens kraft- und formschlüssig aufgeschobenen Stopfhülse in einer Arbeitsphase der Füll-Schubachse, in welcher deren freies Ende bündig mit dem freien Ende des Füllstutzens abschließt,

Fig. 3 eine der Fig. 2 entsprechende Ausschnittvergrößerung, in welcher das ende der Füll-Schubachse während des Vibrationsvorganges über das Ende des Füllstutzens hinausragt.

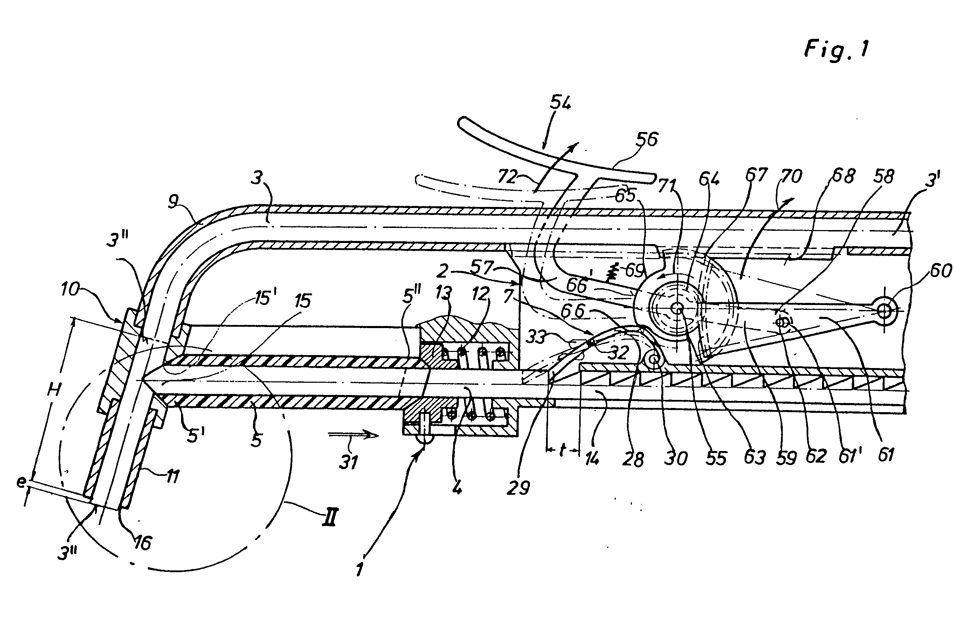

Das neue Gerät 1 besteht gemäß Fig. 1 aus einem Gehäuse 2, einer Füll-Schubachse 3, einer Magazin-Schubachse 4, einem leicht austauschbaren Wechselmagazin 5, einem fingerbetätigten Schiebeknopf, der im vorliegenden Fall als Drehschieber 54 ausgebildet ist und einem Schubhebel 7 in Form einer Blattfeder 28.

Die Blattfeder 28 ist mit ihrem einen Ende 30 unbeweglich am Gehäuse 2 befestigt und greift mit ihrem freien Ende 29 in die Zahnstange 14 an der rückwärtigen Verlängerung der Magazin-Schubachse 4 ein.

Die Füll-Schubachse 3 ist in einem Führungskanal 9 hin- und herbewegbar, wobei sich an den Führungskanal 9 ein Füllstutzen 10 mit auswechselbarem Stopferende 11 anschließt. Das Wechselmagazin 5 mündet mit seinem vorderen Ende 5' in den Füllstutzen 10 ein, in dem es unter Wirkung einer Feder 12 an ihrem anderen Ende 5'' hineingedrückt und während der Arbeitsphase des Gerätes gehalten wird.

Zwischen dem Wechselmagazin 5 und der Feder 12 ist gleitverschieblich ein zylindrischer Kulissenstein 13 angeordnet, der an seinem dem Wechselmagazin 5 zugekehrten Ende eine entsprechend konfigurierte Fläche zu dessen Einsatz aufweist.

Die Zahnstange 14 an der rückwärtigen Verlängerung der Magazin-Schubachse 4 gehört gemeinsam mit dem als Blattfeder 28 ausgebildeten Schubhebel 7 zu einem Getriebe, welches die Bewegungen der Füll- und der Magazin-Schubachse 3, 4 miteinander koppelt und zueinander koordiniert, wenn die Füll-Schubachse 3 einen oberhalb der Einmündung 15 des Wechselmagazins 5 beginnenden und am Ausgang 16 des Füllstutzens 10 endenden Arbeitshub H durchführt. Bei auf die Füll-Schubachse 3 ausgeübten Vibrationen verlängert sich der Arbeitshub um die Schubstrecke e des Vibrators.

Gemäß dem Ausführungsbeispiel der Fig. 1 besteht nunmehr der Schiebeknopf aus einem am Gehäuse 2 auf der Drehachse 55 gelagerten Drehschieber 54, der mit seinem einen, eine Fingermulde 56 aufweisenden Arm 57 aus dem Gehäuse 2 herausragt. Mit dem Ende 58 seines anderen Armes 59 greift der Drehschieber 54 in einen auf der Achse 60 im Gehäuse 2 gelagertes Zahnsegment 61 mittels eines Stiftes 62 gelenkig ein. Die Verzahnung 63 des Zahnsegmentes 61 kämmt mit einem gleichfalls auf der Achse 55 gelagerten Zahnritzel 64. Mit dem Zahnritzel 64 ist drehfest ein Drehelement 65 verbunden, welches gleichfalls auf der Achse 55 drehbar gelagert ist. Dieses Drehelement 65 besteht aus einer Scheibe, und ist mit einem ersten, als Nockenfläche ausgebildeten Vorsprung 66 zum Vorschub des Hebels 28 und damit der Zahnstange 14 der Magazin-Schubachse 4 versehen. Ferner weist das Drehelement 65 einen zweiten Vorsprung in Form einer Kreisbogenverzahnung 67 auf, die mit einer Zahnleiste 68 kämmt, die am rückwärtigen Ende der Füll-Schubachse 3 befestigt ist. Dadurch kann bei einer Drehung der Kreisbogenverzahnung 67 im Gegenuhrzeigersinn die Füll-Schubachse 3 vorgeschoben werden.

Bei in ihrer Extremlage e vorgeschobener Füll-Schubachse 3 und einem auf ihr hinteres Ende wirkenden, nicht dargestellten Vibrator rastet die Kreisbogenverzahnung 67 des Drehelementes 65 aus der Zahnleiste 68 der Füll-Schubachse 3 aus. Dadurch werden Schwingungskräfte unterbunden, die andernfalls über die Kreisbogenverzahnung 67 des Drehelementes auf Zähne des Ritzels 64 und damit auf die Verzahnung 63 des Zahnsegmentes 61 einwirken könnten.

An dem Arm 57 des Drehschiebers 54 greift eine Rückholfeder 69 ein, die ihn unter gleichzeitiger Zurückziehung der Füll-Schubachse 3 in seine Ausgangsposition gemäß Fig. 1 zurückschwenkt. Dabei sind zwar der Drehschieber 54, das Ritzel 64 und das Drehelement 65 gemeinsam auf der gleichen Achse 55 gelagert, jedoch nur letztere 64 und 65 miteinander relativ unbeweglich verbunden.

EP 0 221 526 B1

Dabei kann der in Fig. 1 als Blattfeder 28 ausgebildete Schubhebel auch als Schubkurbel ausgebildet werden.

Das vorbeschriebene Gerät gemäß Fig. 1 arbeitet folgendermaßen:

Sobald über die Fingermulde 56 der Drehschieber 54 aus seiner durchgezeichneten Lage in seine strichpunktiert dargestellte Lage heruntergedrückt wird, schwenkt der Hebelarm 59 mit seinem in ein Langloch 61' des Zahnsegmentes 61 eingreifenden Gelenkstift 62 das Zahnsegment 61 in Richtung des Pfeiles 70. Dadurch wird das Ritzel 64 und damit auch zugleich das mit ihr drehbeweglich gekuppelte Drehelement 65 zu einer Drehung in Richtung des Pfeiles 71 veranlaßt. Hierdurch wird über den ersten Vorsprung in Form der Nockenfläche 66 am Drehelement 65 die Blattfeder 28 in ihre strichpunktiert dargestellte Lage niedergedrückt und die Zahnstange 14 vorgeschoben, wodurch die Magazin-Schubachse 4 aus dem Wechselmagazin 5 eine Amalgamportion in den Füllstutzen 10 drückt. Bei einem Zurückschwenken der Nockenfläche 66 entgegen der Richtung des Pfeiles 71 federt die Blattfeder 28 unter Wirkung ihrer Eigenspannung um mindestens eine Zahnteilung t in ihre Ausgangslage zurück, aus welcher sie sodann von der Nockenfläche 66 zu einem erneuten Vorschub veranlaßt werden kann.

In der dargestellten Lage der Fig. 1 befindet sich das vordere Ende 3'' der Füll-Schubachse 3 zunächst oberhalb der Oberkante 15' der Einmündungsöffnung 15 des Wechselmagazines in den Füllstutzen 10. Durch Herunterdrücken des Drehschiebers 54 von seiner ausgezogenen in seine strichpunktierte Lage wird über das Ritzel 64 zugleich auch das mit ihm drehfest verbundene Drehelement 65 in Richtung des Pfeiles 71 gedreht. Dadurch wird über die Kreisbogenverzahnung 67 und die Zahnleiste 68 die Füll-Schubachse 3 in Richtung auf die Oberkante 15' der Einmündungsöffnung 15 des Wechselmagazins 5 verschoben. Wenn das vordere Ende 3'' der Füll-Schubachse 3 die Oberkante 15' erreicht hat, ist bereits von der Magazin-Schubachse 4 der Einschub der Amalgamportion in den Füllstutzen 10 beendet. Dann wird diese Amalgamportion von dem weiter vorrückenden Ende 3'' der Füll-Schubachse 3 abgeschert und aus dem Ausgang 16 des Füllstutzens 10 in die nicht dargestellte Zahnkavität befördert.

Da sich an die Nockenfläche 66 eine im gleichen Abstand von der Lagerachse 55 befindliche, gleichbleibende Kreisbogenfläche 66' anschließt, verbleibt die Magazin-Schubachse 4 während des vorbeschriebenen Vorschubes der Füll-Schubachse 3 in der durch die strickpunktiert dargestellte Lage der Blattfeder 28 bestimmten Position.

Bei Loslassen des Drehschiebers 54 zieht die Feder 69 den Drehschieber 54 in Richtung des Pfeiles 72 in seine Ausgangslage zurück, wodurch über dem Hebelarm 59, den Kupplungsstift 62, das Zahnsegment 61 und dessen Verzahnung 63 das Ritzel und das Drehelement 65 gleichfalls entgegen der Richtung des Pfeiles 71 in ihre Ausgangspositionen zurückgedreht werden. Dadurch wird über die Zahnleiste 68 auch die Füll-Schubachse 3 in die dargestellte Ausgangslage zurückgezogen, so daß auf die Fingermulde 56 und damit auf den Drehschieber 54 ein erneuter Vorschub der Füll-Schubachse 3 ausgelöst werden kann.

Wenn das vordere Ende 3'' der Füll-Schubachse 3 in die aus dem Füllstutzen 10 herausragende Extremlage e vorgeschoben ist, kann auf das hintere Ende 3' der Füll-Schubachse 3 ein nicht dargestellter Vibrator einwirken. In diesem Fall rastet vorteilhaft die Kreisbogenverzahnung 67 aus der Zahnleiste 68 aus, so daß weder auf die Zähne der Kreisbogenverzahnung 67 und damit der Zahnleiste 68 noch auf die Zähne des Ritzels 64 und damit auf die Zähne der Verzahnung 63 des Zahnsegmentes 61 nachteilige Schwingungskräfte ausgeübt werden können.

Um die Zahnstange 14 zum Austauschen des Wechselmagazins 5 in Richtung des Pfeiles 31 zurückziehen zu können, muß die Blattfeder 28 aus der Zahnstange 14 ausgerückt werden. Dies geschieht dadurch, daß die Blattfeder 28 einen Rastvorsprung 32 aufweist, der durch eine im wesentlichen Z-förmige Öffnung 33 des Gehäuses 2 greift und über den von außen mittels eines Fingers die Blattfeder 28 aus der Verzahnung der Zahnstange 14 ausrastbar ist. Diese Ausrastmöglichkeit muß außerdem deshalb jederzeit gegeben sein, damit bei vorzeitigem Rückschwenken des Drehschiebers 54 vor dem Abscheren der Amalgamportionen ein wiederholter Amalgamvorschub der Magazin-Schubachse 4 unterbunden werden kann. Hiernach wird das Wechselmagazin 5 entgegen der Kraft der Feder 12 in Richtung des Pfeiles 31 verschoben, worauf das vordere Ende 5' aus dem Füllstutzen 10 nach hinten ausgeklinkt und sodann das hintere Ende 5'' aus dem zylindrischen Kulissenstein 13 herausgezogen werden kann. Danach wird das neue gefüllte Wechselmagazin 5 in umgekehrter Reihenfolge wieder eingesetzt und sodann die Blattfeder 28 mittels des Rastvorsprunges 32 wiederum mit der Verzahnung der Zahnstange 14 in Eingriff gebracht.

Nach dem Füllen der nicht dargestellten Zahnkavität wird über das freie Ende des Füllstutzens 10 oder genauer über das Stopferende 11 eine Stopfhülse 73 aus einem gegenüber dem Zahnschmelz weicheren Material geschoben, die nach Beendigung des Form- und Verdichtungsvorganges per Hand davon abziehbar ist. Diese Stopferhülse weist an einem Ende einen festen geschlossenen, insbesondere vom vorderen Ende 3'' der Füll-Schubachse 3 während des Verdichtungsvorganges beaufschlagbaren Stopfkern 74 und am anderen Ende einen das Füllende 11 des Füll-Stutzens 10 elastisch umgreifenden Haltering 75 auf. Der Haltering 75 wiederum ist an seinem freien Ende mit einem Klemmring 76 und an seinem dem Stopfkern 74 zugewandten Ende mit einem längenveränderlichen Dehnring 77 versehen. Dabei besteht die Stopferhülse 73 entweder aus Gummi oder aus einem Kunststoff, wie z.B. Polyamid oder einem Polyolefin. Die Außenfläche 78 des Stopfkernes 74 kann zur Anpassung an unterschiedliche Zahnkavitätenformen mit unterschiedlichen Konfigurationen, z.B. in Form einer Kugel, eines abgerundeten Kegels, eines Ellipsoids oder eines abgerundeten Zylinders, versehen sein.

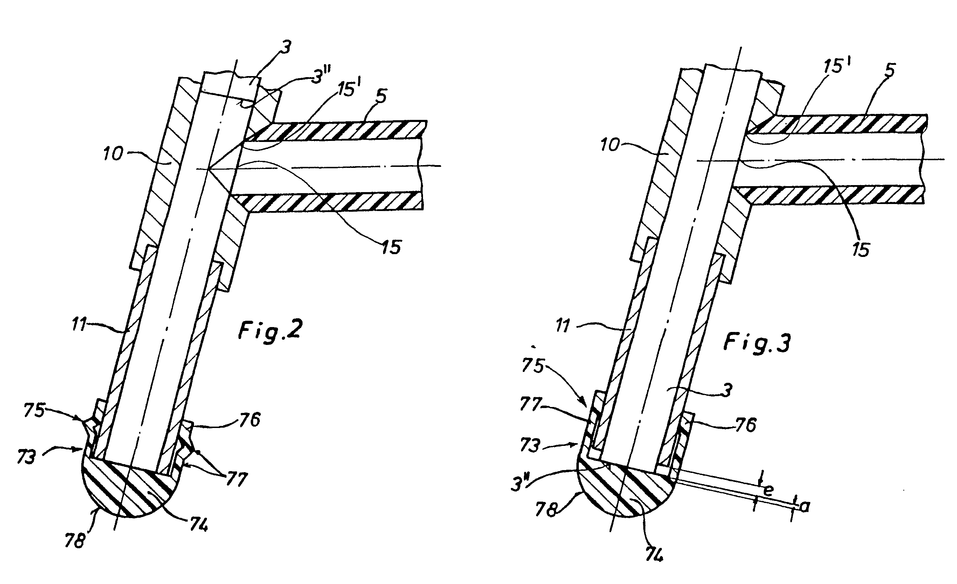

Im dargestellten Fall der Fig. 2 und 3 ist die Außenfläche 78 des Stopfkernes 73 mit einer

4

Halbkugelform versehen.

Sobald das vordere Ende 3'' der Füll-Schubachse 3 gemäß Fig. 3 in seine Extremlage e vorgeschoben worden ist und auf das rückwärtige Ende 3' (s. Fig. 1) der Füll-Schubachse 3 ein nicht dargestellter Vibrator einwirkt, tritt der Dehnring 77 in Tätigkeit, wodurch einerseits der Klemmring 76 seine unveränderliche Lage an dem Stopferende 11 des Füllstutzens 10 beibehält, wohingegen der Stopfkern 74 um beispielsweise die Amplitude a in beiden Richtungen des Doppelpfeiles schwingt und mit seiner halbkugelförmigen Außenfläche 78 das Amalgam verdichtet und zugleich bei dieser Schwingungsbeanspruchung die angrenzenden Kanten des Zahnschmelzes der betreffenden Zahnkavität schont.

B e z u g s z e i c h e n l i s t e :

| neues Gerät | 1 | | |
|---|---|---|---|
| Gehäuse | 2 | | |
| Füll-Schubachse | 3 | | |
| vorderes Ende von Füll-Schubachse 3 | 3'' | | |
| hinteres Ende von Füll-Schubachse 3 | '3' | | |
| Magazin-Schubachse | 4 | | |
| Wechselmagazin | 5 | | |
| Enden von Wechselmagazin 5 | 5' | 5'' | |
| Schubhebel | 7 | | |
| Führungskanal | 9 | | |
| Füllstutzen | 10 | | |
| Stopferende | 11 | | |
| Feder | 12 | | |
| Kulissenstein | 13 | | |
| Zahnstange | 14 | | |
| Einmündung des Wechsel-magazins 5 | 15 | | |
| Oberkante von Einmündung 15 | 15' | | |

| Ausgang des Füllstutzens | 16 | | |
|---|---|---|---|
| Blattfeder | 28 | | |
| Enden von Blattfeder 28 | 29 | 30 | |
| Rastvorsprung | 32 | | |
| Z-förmige Öffnung | 33 | | |
| Drehschieber | 54 | | |
| Drehachse | 55 | | |
| Fingermulde | 56 | | |
| Hebelarme von Drehschieber 54 | 57 | 59 | |
| Ende von Hebelarm 59 | . 58 | | |
| Schwenkachse | 60 | | |
| Zahnsegment | 61 | | |
| Langloch | 61' | | |
| Gelenkstift | 62 | | |
| Verzahnung | 63 | | |
| Zahnritzel | 64 | | |
| Drehelement | 65 | | |
| Nockenfläche | 66 | | |
| Kreisbogenfläche | 66' | | |
| Kreisbogenverzahnung | 67 | | |
| Zahnleiste | 68 | | |
| Rückholfeder | 69 | | |

| Bewegungspfeile | 70 | 71 | 72 | |
|---|---|---|---|---|
| Stopferhülse | 73 | | | |
| Stopfkern | 74 | | | |
| Haltering | 75 | | | |
| Klemmring | 76 | | | |
| Dehnring | 77 | | | |
| Außenfläche von Stopferhülse 73 | 78 | | | |
| Amplitude | a | | | |
| Schubstrecke des Vibrators | e | | | |
| Zahnteilung | t | | | |

**Patentansprüche**

1. Gerät zur Füllung von Zahnkavitäten mit Füllstoffen, z.B. mit Amalgam, welches einen Füllstutzen und eine in einem Führungskanal hin- und herzubewegende, in den Füllstutzen übergehende Füll-Schubachse sowie ein quer zum Füllstutzen angeordnetes, in ihn einmündendes sowie herausnehmbares Wechselmagazin aufweist, aus dem über eine in einem zweiten Führungskanal geführte Magazin-Schubachse zu Beginn des oberhalb der Einmündung des Wechselmagazins beginnenden und am Ausgang des Füllstutzens endenden Arbeitshubes der Füll-Schubachse ein Teil des Füllstoffes in den Füllstutzen zu drücken ist, wobei die von einem gemeinsamen Gehäuse umgebene Füll- und Magazin-Schubachse durch ein ihre Bewegung zueinander koordinierendes, mechanisches Getriebe miteinander gekoppelt sind, zu dem eine mit der Magazin-Schubachse verbundene Zahnstange und ein an dem Gehäuse schwenkbeweglich angelenkter Schubhebel gehören, der mit seinem freien Ende in die Zahnstänge eingreift und diese während eines Arbeitshubes über einen mit der Füll-Schubachse in Antriebsverbindung stehenden, fingerbetätigten Schiebeknopf und einen Vorsprung in Richtung auf den Füllstutzen verschiebt, bevor das vordere Ende der Füll-Schubachse die Oberkante der Einmündung des Wechselmagazins in den Füllstutzen erreicht, dadurch gekennzeichnet, daß der Schiebeknopf aus einem an dem Gehäuse (2) schwenkbeweglich gelagerten, zweiarmigen Drehschieber (54) besteht, der mit seinem einen, eine Fingermulde (56) aufweisenden Arm (57) aus dem Gehäuse (2) herausragt und mit dem Ende (58) seines anderen Armes (59) in ein gleichfalls am Gehäuse (2) gelagertes Zahnsegment (61) gelenkig eingreift, dessen Verzahnung (63) mit einem am Gehäuse (2) drehfest gelagerten Zahnritzel (64) kämmt, mit dem ein Drehelement (65) drehfest verbunden ist, welches einen ersten Vorsprung (66) zum Vorschub des Schubhebels (7) und damit der Zahnstange (14) der Magazin-Schubachse (4) und einen zweiten Vorsprung (67) zum Vorschub der Füll-Schubachse (3) aufweist.

2. Gerät nach Anspruch 1, dadurch gekennzeichnet, daß das Drehelement aus einer Scheibe (65) besteht, deren erster Vorsprung von einer an ihrem Umfang angeordneten Nockenfläche (66) und deren zweiter Vorsprung von einer Kreisbogenverzahnung (67) gebildet ist, die sich mit einer an der Füll-Schubachse (3) befestigten Zahnleiste (68) in Eingriff befindet.

3. Gerät nach Anspruch 1 oder 2, dadurch gekennzeichnet, daß das Drehelement (65) und das Ritzel (64) auf der gleichen Achse (35) wie der zweiarmige Drehschieber (54) gelagert sind und das Ritzel (64) mit dem Drehelement (65) relativ drehungbeweglich verbunden ist.

4. Gerät nach Anspruch 1, 2 oder 3, dadurch gekennzeichnet, daß die Kreisbogenverzahnung (67) des Drehelementes (65) bei in ihrer Extremlage (e) vorgeschobener Füll-Schubachse (3) und einem auf letztere wirkenden Vibrator aus der Zahnleiste (68) der Füll-Schubachse (3) ausrastet.

5. Gerät nach einem oder mehreren der Ansprüche 1 bis 4, dadurch gekennzeichnet, daß an dem zweiarmigen Drehschieber (54) eine Rückholfeder (69) angreift, die ihn (54) unter gleichzeitiger Zurückziehung der Füll-Schubachse (3) in seine Ausgangsposition zurückschwenkt.

6. Gerät nach einem oder mehreren der Ansprüche 1 bis 5, dadurch gekennzeichnet, daß der Schubhebel (7) entweder aus einer Schubkurbel oder aus einer Blattfeder (28) besteht.

7. Gerät nach einem oder mehreren der Ansprüche 1 bis 6, dadurch gekennzeichnet, daß nach dem Füllen der Zahnkavität über das freie Ende des Füllstutzens (10) kraft- und/oder formschlüssig eine Stopfhülse (73) aus einem gegenüber dem Zahnschmelz weicheren Material schiebbar ist und nach Beendigung des Formund Verdichtungsvorganges per Hand davon abziehbar ist.

8. Gerät nach Anspruch 7, dadurch gekennzeichnet, daß die Stopfhülse (73) an einem Ende einen festen, geschlossenen, insbesondere von der Füll-Schubachse (3) während des Verdichtungsvorganges beaufschlagbaren Stopfkern (74) und am anderen Ende einen den Füllstutzen (10) elastisch umgreifenden Haltering (75) aufweist.

9. Gerät nach Anspruch 7 oder 8, dadurch gekennzeichnet, daß der Haltering (75) an seinem freien Ende mit einem Klemmring (76) und an seinem dem Stopfkern (74) zugewandten Ende mit einem längenveränderlichen Dehnring (77) versehen ist.

10. Gerät nach einem oder mehreren der Ansprüche 7 bis 9, dadurch gekennzeichnet, daß die Stopfhülse (73) aus einem Gummi oder einem Kunststoff, z.B. aus Polyamid oder einem Polyolefin, besteht und an der Außenfläche (78) ihres Stopfkernes (74) mit unterschiedlichen Konfigurationen in Form einer Kugel, eines abgerundeten Kegels, eines Ellipsoids oder eines abgerundeten Zylinders versehen ist.

**Revendications**

1. Appareil pour le remplissage de cavités dentaires au moyen de produits de remplissage, par exemple au moyen d'amalgames, qui comporte une tubulure de remplissage et un axe de poussée du produit de remplissage, qui se déplace d'un mouvement de va-et-vient dans un conduit de guidage et qui aboutit à la tubulure de remplissage, ainsi qu'un magasin de remplissage qui est disposé transversalement par rapport à la tubure de remplissage dans laquelle il débouche et dont il peut être séparé et à partir duquel, au moyen d'un axe de poussée du magasin guidé dans un deuxième conduit de guidage, au début de la course de travail de l'axe de poussée de remplissage, qui commence au-dessus du débouché du magasin et se termine à la sortie de la tubulure de remplissage, une partie du produit de remplissage est poussé dans la tubulure de remplissage, les axes de remplissage et de poussée du magasin, qui sont entourés par une enveloppe commune, étant accouplés l'un à l'autre par un engrenage mécanique qui coordonne leurs déplacements et q'ui comprend une crémaillère rectiligne reliée à l'axe de poussée du magasin et un levier de poussée qui s'articule sur l'enveloppe de manière à pouvoir pivoter et qui s'engage par son extrémité libre dans la cremaillère et, pendant une course de travail, la déplace au moyen d'un boubon-poussoir qui, pour l'entraînement, est relié à l'axe de poussée de remplissage et est poussé par le doigt de l'opérateur et pousse une partie saillante dans la direction de la tubulure de remplissage avant que l'extrémité avant de l'axe de poussée de remplissage atteigne le bord supérieur de l'embouchure du magasin dans la tubulure de remplissage, caractérisé en ce que le bouton-poussoir est constitué par un poussoir (54) à deux bras qui est monté sur l'enveloppe (2) de manière à pouvoir pivoter et, par l'un de ses bras (57) comportant une partie incurvée rentrante (56) destinée au doigt de l'opérateur, dépasse à l'extérieur de l'enveloppe (2) et qui, par l'extrémité (58) de son autre bras (59), s'engage dans un secteur denté (61) qui est également monté sur paliers sur l'enveloppe (2) et dont l'endentement (63) est associé à un pignon (64) qui est monté sans possibilité de rotation relative sur l'enveloppe (2) et auquel est relié sans possibilité de rotation relative un élément tournant (65) qui comporte une première partie saillante (66) assurant la poussée avant du levier de poussée (7) et, en même temps, de la crémaillère (14) de l'axe de poussée (4) du magasin, et une deuxième partie saillante (67) assurant la poussée en avant de l'axe (3) de poussée de remplissage.

2. Appareil selon la revendication 1, caractérisé en ce que l'élément tournant est constitué par un disque (65) dont la première partie saillante est constituée par une surface à cames (66) située à sa périphérie et dont la deuxième partie saillante est constituée par un endentement (67) en arc de cercle qui est en prise avec une barre dentée (68) fixée à l'axe (3) de poussée de remplissage.

3. Appareil selon l'une des revendications 1 ou 2, caractérisé en ce que l'élément tournant (65) et le pignon (64) sont montés sur le même axe (35) que l'organe de commande tournant (54) à deux bras et que le pignon (64) est relié à l'élément tournant (65) de manière à pouvoir tourner d'un mouvement relatif.

4. Appareil selon une des revendications 1, 2 ou 3, caractérisé en ce que l'endentement (67) en arc de cercle de l'élément tournant (65), se trouve, lorsque l'axe de poussée (3) de remplissage est poussé dans sa position extrême avant (2) et qu'un vibreur agit sur cet axe, à l'extérieur de la barre dentée (68) de l'axe (3) de poussée de remplissage.

5. Appareil selon lune ou plusieurs des revendications 1 à 4, caractérisé en ce que l'organe de commande tournant (54) est soumis à l'action d'un ressort de rappel (69) qui, pendant le recul de l'axe de poussée (3) de remplissage, ramène l'organe (54) à sa position de départ.

6. Appareil selon une ou plusieurs des revendications 1 à 5, caractérisé en ce que le levier de poussée (7) est constitué par une manivelle de poussée ou par un ressort en feuilles (28).

7. Appareil selon une ou plusieurs des revendications 1 à 6, caractérisé en ce qu'après le remplissage de la cavité dentaire il est possible, par l'extrémité libre de la tubulure de remplissage (10), de mettre en place à forcement et/ou par encastrement une douille d'obturation (73) constituée par un matériau moins dur que celui du plombage de la dent et de la retirer à la main après l'opération de moulage et de compactage.

8. Appareil selon la revendication 7, caractérisé en ce que la douille d'obturation (73) comporte, à l'une de ses extrémités, un noyau d'obturation (74) solide, fermé, qui peut notamment pendant l'opération de compactage, être soumis à l'action de l'axe de poussée (3) de remplissage et, à son autre extrémité, un anneau de maintien (75) qui entoure élastiquement la tubulure de remplissage (10).

9. Appareil selon l'une des revendications 7 ou 8, caractérisé en ce que l'anneau de maintien (65) comporte, à son extrémité libre, un anneau de serrage (76) et, à son extrémité la plus proche du noyau d'obturation (74), un anneau d'extension (77) de longueur variable.

10. Appareil selon une ou plusieurs des revendications 7 à 9, caractérisé en ce que la douille d'obturation (73 est constituée par du caoutchouc ou par une matière plastique, par exemple par une polyamide ou par une polyoléfine et présente, à la surface extérieure (78) de son noyau d'obturation (74), différentes formes pouvant être celles d'un sphère, d'un cône arrondi, d'un ellipsoïde et d'un cylindres arrondi.

## Claims

1. Device to fill a tooth cavity with filling compounds, e.g. with amalgam, which comprises a filling socket, a filling push shaft, moving backwards and forwards in a guide duct and passing into the filling socket, and a removable change magazine arranged transversely to the filling socket and opening into it, from which magazine some of the filling compound must be forced into the filling socket via a magazine push shaft guided in a second guide duct, at the beginning of the working stroke of the filling push shaft, commencing above the opening of the change magazine and ending at the output of the filling socket, the filling and magazine push shaft, surrounded by a common housing, being connected together by means of a mechanical gear coordinating their movement, which gear includes a rack connected to the magazine push shaft, and a push lever pivoted on the housing, which lever engages with its free end in the rack, and displaces a projection in the direction of the filling socket during a working stroke by means of a finger operated sliding knob in driving connection with the filling push shaft before the front end of the filling push shaft reaches the upper edge of the opening of the change magazine in the filling socket, characterised in that the sliding knob consists of a two-armed rotary slide (54) pivoted on the housing (2), which slide projects from the housing (2) with one of its arms (57) exhibiting a finger recess (56), and engages by articulated means with the end (58) of its other arm (59) in a toothed segment (61) also supported on the housing (2), the toothing (63) of which segment engages in a pinion (64) rigidly supported on the housing (2), to which pinion a rotary element (65) is rigidly connected, which element exhibits a first projection (66) for advancing the push lever (7), and hence of the rack (14) of the magazine push shaft (4), and a second projection (67) for feeding the filling push shaft (3).

2. Device according to claim 1, characterised in that the rotary element consists of a plate (65) whose first projection is formed from a cam face (66) arranged on its circumference, and whose second projection is formed from a circular arc toothing (67) which is engaged with a toothed plate (68) secured to the filling push shaft (3).

3. Device according to claim 1 or 2, characterised in that the rotary element (65) and the pinion (64) are supported on the same shaft (35) as the two-armed rotary slide (54), and in that the pinion (64) is connected to the rotary element (65) in a relatively fixed manner.

4. Device according to claim 1, 2 or 3, characterised in that the circular arc toothing (67) of the rotary element (65) disengages from the toothed plate (68) of the filling push shaft (3) when the filling push shaft (39) is advanced to its extreme position (e), with a vibrator acting on the latter.

5. Device according to one or more of claims 1 to 4, characterised in that a recuperating spring (69) engages the two-armed rotary slide (54), which spring returns it (54) to its initial position, whilst at the same time pulling back the filling push shaft (3).

6. Device according to one or more of claims 1 to 5, characterised in that the push lever (7) consists either of a push crank or a leaf spring (28).

7. Device according to one or more of claims 1 to 6, characterised in that a plug sleeve (73) is capable of being slid out of a material which is softer than the enamel, via the free end of the filling socket (10), positively and/or non-positively, after the tooth cavity has been filled, and which can be pulled from it by hand after the shaping and compression process has been completed.

8. Device according to claim 7, characterised in that a plug sleeve (73) exhibits at its end a fixed, closing plug core (74), which can, in particular, be loaded by the filling push shaft (3) during the compression process, and at the other end exhibits a support ring (75) elastically gripping the filling socket (10).

9. Device according to claim 7 or 8, characterised in that the support ring (75) is provided at its free end with a clamping ring (76), and at its end facing the plug core (74) with an expanding ring (77) variable in length.

10. Device according to one or more of claims 7 to 9, characterised in that the plug sleeve (73) consists of a rubber or a plastic, e.g. of polyamide or a polyolefin, and is provided on the outer face (78) of its plug core (74) with different configurations in the shape of a sphere, rounded cone, an ellipsoid or a rounded cylinder.

Fig. 1

Fig.3

Fig.2